(19) Europäisches Patentamt
European Patent Office
Office européen des brevets

(11) **EP 3 406 082 B1**

(12) **FASCICULE DE BREVET EUROPEEN**

(45) Date de publication et mention de la délivrance du brevet:
**20.11.2019 Bulletin 2019/47**

(21) Numéro de dépôt: **17700284.7**

(22) Date de dépôt: **12.01.2017**

(51) Int Cl.:
*H04N 21/442* *(2011.01)*  *H04N 21/422* *(2011.01)*
*H04N 21/462* *(2011.01)*  *H04N 21/488* *(2011.01)*
*H04N 21/845* *(2011.01)*

(86) Numéro de dépôt international:
**PCT/EP2017/050521**

(87) Numéro de publication internationale:
**WO 2017/125304 (27.07.2017 Gazette 2017/30)**

(54) **PROCEDE DE DIFFUSION D'UN CONTENU MULTIMEDIA MESURANT L'ATTENTION D'UN UTILISATEUR**

VERFAHREN ZUM AUSSTRAHLEN VON MULTIMEDIA-INHALTEN ZUM MESSEN DER AUFMERKSAMKEIT EINES BENUTZERS

METHOD OF BROADCASTING A MULTIMEDIA CONTENT MEASURING THE ATTENTION OF A USER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.01.2016 FR 1650379**

(43) Date de publication de la demande:
**28.11.2018 Bulletin 2018/48**

(73) Titulaire: **Sagemcom Broadband SAS**
**92500 Rueil-Malmaison (FR)**

(72) Inventeur: **BENAMROUCHE, Farid**
**92500 Rueil Malmaison (FR)**

(74) Mandataire: **Cabinet Camus Lebkiri**
**25 rue de Maubeuge**
**75009 Paris (FR)**

(56) Documents cités:
**EP-A1- 1 582 965** **US-A1- 2012 304 216**
**US-A1- 2014 096 152** **US-A1- 2015 271 558**

## Description

### DOMAINE TECHNIQUE DE L'INVENTION

Le domaine technique de l'invention est celui de la diffusion de contenus multimédia. La présente invention concerne un procédé de diffusion d'un contenu multimédia et en particulier un procédé de diffusion d'un contenu multimédia mesurant l'attention d'un utilisateur.

### ARRIERE-PLAN TECHNOLOGIQUE DE L'INVENTION

Lorsqu'un contenu multimédia est diffusé, il est important lors de certaines périodes de s'assurer de l'attention d'un utilisateur. C'est par exemple le cas lorsque le contenu diffusé concerne un contenu important tel qu'une publicité ou un message de type « alerte enlèvement ».

Pour s'assurer de l'attention de l'utilisateur, il est connu d'utiliser des signaux sonores facilement identifiables tels qu'un thème d'émission (« jingle » en anglais) ou bien encore une musique. Cependant, cette technique ne garantit pas une attention maximale de l'utilisateur. En effet, la solution est entièrement passive dans la mesure où elle ne permet pas de déterminer si le signal sonore a été efficace et si l'attention de l'utilisateur a bien été captée.

Les documents US2015/271558 A1, EP1582965 A1 et US 2014/096152 A1 divulguent des systèmes pour analyser l'intérêt d'utilisateurs regardant un programme vidéo à partir de données biométriques et la mise en œuvre d'actions lorsque le niveau d'attention de l'utilisateur est élevé.

Il existe donc un besoin d'un procédé de diffusion permettant de s'assurer d'un niveau d'attention d'un utilisateur suffisant avant la diffusion d'un contenu important.

### RESUME DE L'INVENTION

L'invention offre une solution aux problèmes évoqués précédemment, en permettant d'effectuer un suivi de l'attention d'un utilisateur à partir de données biométriques et en ne diffusant un contenu important que lorsque le niveau d'attention de l'utilisateur est suffisant.

Pour cela, un premier aspect de l'invention concerne un procédé de diffusion d'un contenu multimédia mettant en œuvre un système de diffusion et mesurant l'attention d'un utilisateur.

Le système de diffusion comporte un décodeur, un moyen d'affichage, un capteur de données biométriques d'un utilisateur situé à proximité du moyen d'affichage et une base de données ; le moyen d'affichage, la base de données et le capteur de données biométriques étant reliés au décodeur ; le contenu multimédia étant affiché par le moyen d'affichage et découpé en différentes périodes ; la base de données comprenant pour chacune desdites périodes une variation attendue d'un niveau d'attention de l'utilisateur.

On entend par décodeur un dispositif comportant des moyens de décodage et d'encodage d'un signal audio ou vidéo, des moyens de connexion à un réseau, des moyens de transmission de signaux audio et vidéo vers un moyen d'affichage ainsi que des moyens de calcul associés à des moyens de mémorisation.

On entend par moyen d'affichage tout moyen de diffusion d'un contenu multimédia. Il s'agit donc d'un moyen d'affichage comportant également des moyens de diffusion sonore, par exemple un téléviseur ou un ordiphone (ou « smartphone » en anglais).

Le procédé selon l'invention comporte :

- une étape d'acquisition de premières données biométriques relatives à un utilisateur à l'aide du capteur de données biométriques ;
- une étape d'enregistrement, par le décodeur, des premières données biométriques ;
- une étape d'association par le décodeur des premières données biométriques à un niveau d'attention de l'utilisateur ;
- une première étape de comparaison, par le décodeur, du niveau d'attention de l'utilisateur associé aux premières données biométriques avec le niveau d'attention de l'utilisateur associé à des deuxièmes données biométriques enregistrées précédemment ;
- si le niveau d'attention de l'utilisateur augmente, une deuxième étape de comparaison, par le décodeur, de la variation mesurée du niveau d'attention de l'utilisateur avec la variation attendue du niveau d'attention de l'utilisateur extraite de la base de données par le décodeur pour la période du contenu multimédia en cours de diffusion ;
- si la variation mesurée et la variation attendue sont sensiblement identiques, une étape de mise en œuvre d'une action par le décodeur.

Ainsi, l'action mise en œuvre par le décodeur n'est effectuée que lorsque le niveau d'attention de l'utilisateur augmente. En outre, ladite action n'est effectuée que si l'évolution de l'attention de l'utilisateur mesuré correspond à l'évolution de l'attention de l'utilisateur attendue compte tenu du contenu diffusé. Autrement dit, l'action n'est effectuée que lorsque l'attention de l'utilisateur est à destination du moyen d'affichage et non pas dirigée vers une activité sans lien avec le contenu diffusé. L'action peut par exemple être la diffusion d'une information importante à destination de l'utilisateur telle qu'un message publicitaire ou un message de type « alerte enlèvement ». Cette information importante est alors diffusée au moment où l'attention de l'utilisateur est dirigée vers le moyen d'affichage.

Outre les caractéristiques qui viennent d'être évoquées dans le paragraphe précédent, le procédé de diffusion selon un aspect de l'invention peut présenter une ou plusieurs caractéristiques complémentaires parmi les suivantes, considérées individuellement ou selon toutes les combinaisons techniquement possibles.

Avantageusement, le procédé de diffusion comporte, directement après l'étape d'acquisition des premières données biométriques une troisième étape de comparaison par le décodeur des premières données biométriques avec les deuxièmes données biométriques, le procédé réalisant une nouvelle étape d'acquisition si les premières données biométriques et les deuxièmes données biométriques sont sensiblement identiques.

Ainsi, le procédé selon l'invention n'est exécuté dans son intégralité que si une évolution des données biométriques est constatée. Les deuxièmes données biométriques seront donc réutilisées lors d'une prochaine itération du procédé selon l'invention si aucune évolution des données biométriques n'est constatée.

Avantageusement, le procédé de diffusion comprend, directement après la première étape de comparaison et si le niveau d'attention diminue, une étape d'émission, sur instruction du décodeur, d'un signal afin d'attirer l'attention de l'utilisateur.

Avantageusement, le procédé de diffusion comprend, directement après la deuxième étape de comparaison et si la variation mesurée et la variation attendue ne sont pas identiques, une étape d'émission, sur instruction du décodeur d'un signal afin d'attirer l'attention de l'utilisateur.

Ainsi, l'attention de l'utilisateur est stimulée lorsque ledit utilisateur semble ne plus prêter attention au contenu diffusé.

De préférence, la base de données comporte, pour chaque période, une donnée relative à l'action à mettre en œuvre par le décodeur lors de l'étape de mise en œuvre d'une action, c'est-à-dire lorsque la variation du niveau d'attention mesurée et la variation du niveau d'attention attendue sont sensiblement identiques. Ainsi, il est possible d'adapter l'action à mettre en œuvre au contenu diffusé.

Avantageusement, le capteur de données biométriques consiste en un bracelet intelligent ou une paire de lunettes intelligente. Ainsi, il n'est pas nécessaire d'installer des capteurs biométriques sur le moyen d'affichage ou sur le décodeur. Avantageusement, les données biométriques comportent des données relatives au rythme cardiaque et/ou au niveau de transpiration et/ou à la température et/ou l'activité cérébrale et/ou le rythme respiratoire de l'utilisateur.

Un deuxième aspect de l'invention concerne un décodeur pour la diffusion d'un contenu multimédia, ledit décodeur comportant des moyens pour être connecté à :

- un moyen d'affichage destiné à afficher le contenu multimédia, ledit contenu multimédia étant découpé en différentes périodes ;
- un capteur de donnée biométrique configuré pour acquérir des premières données biométriques relatives à un utilisateur situé à proximité du moyen d'affichage ;
- une base de données comprenant pour chacune desdites périodes une variation attendue d'un niveau d'attention de l'utilisateur.

Le décodeur selon un deuxième aspect de l'invention comporte en outre des moyens pour :

- enregistrer les premières données biométriques issue du capteur de donnée biométrique ;
- associer les premières données biométriques à un niveau d'attention de l'utilisateur ;
- comparer le niveau d'attention de l'utilisateur associé aux premières données biométriques avec le niveau d'attention de l'utilisateur associé à des deuxièmes données biométriques enregistrées précédemment ;
- si le niveau d'attention de l'utilisateur augmente, comparer la variation mesurée du niveau d'attention de l'utilisateur avec la variation attendue du niveau d'attention de l'utilisateur extraite de la base de données pour la période du contenu multimédia en cours de diffusion ;
- si la variation mesurée et la variation attendue sont sensiblement identiques, mettre en œuvre une action consistant en une opération de diffusion d'un message.

Un troisième aspect de l'invention concerne un produit programme d'ordinateur comprenant des instructions qui conduisent le décodeur selon un deuxième aspect de l'invention à exécuter les étapes du procédé selon un premier aspect de l'invention.

Un quatrième aspect de l'invention concerne un support lisible par ordinateur, sur lequel est enregistré le programme d'ordinateur selon un troisième aspect de l'invention.

L'invention et ses différentes applications seront mieux comprises à la lecture de la description qui suit et à l'examen des figures qui l'accompagnent.

**BREVE DESCRIPTION DES FIGURES**

D'autres caractéristiques et avantages de l'invention ressortiront à la lecture de la description détaillée qui suit, en référence aux figures annexées, qui illustrent :

- la figure 1, une représentation schématique du système de diffusion selon l'invention ;
- la figure 2, un ordinogramme du procédé de l'invention selon un premier mode de réalisation ;
- la figure 3, un ordinogramme du procédé de l'invention selon un deuxième mode de réalisation ;
- la figure 4, un ordinogramme du procédé de l'invention selon un troisième mode de réalisation ;
- la figure 5, un ordinogramme du procédé de l'invention selon un quatrième mode de réalisation.

## DESCRIPTION DETAILLEE

Sauf précision contraire, un même élément apparaissant sur des figures différentes présente une référence unique.

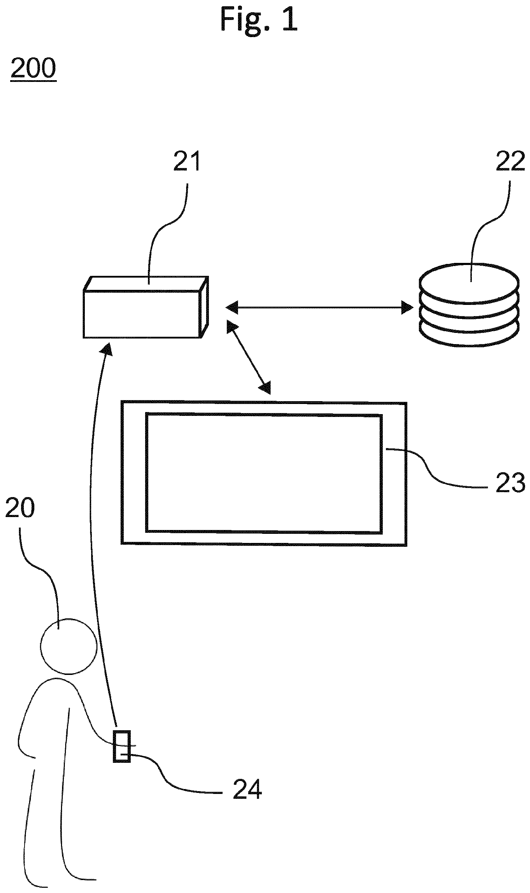

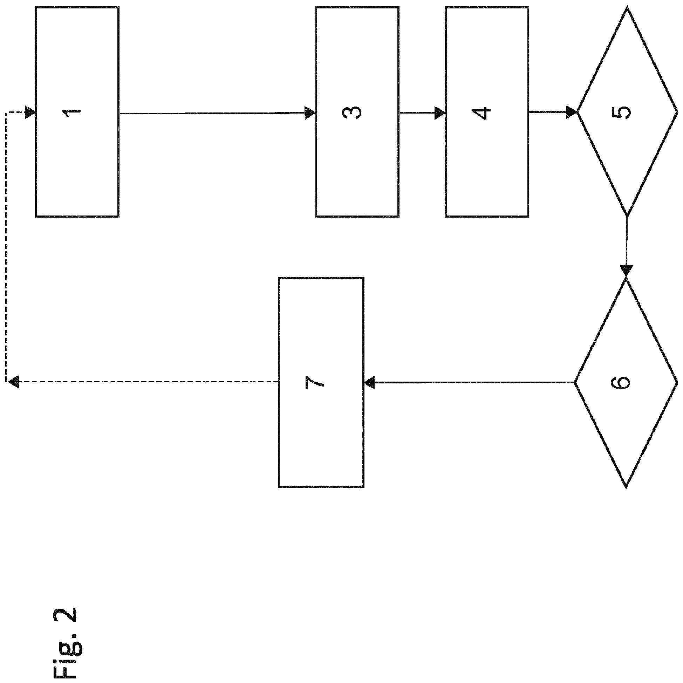

Dans un mode de réalisation illustré aux figures 1 et 2, le procédé de diffusion d'un contenu multimédia mesurant l'attention d'un utilisateur est mis en œuvre par un système de diffusion 200 comportant un décodeur 21, un moyen d'affichage 23, un capteur de données biométriques 24 d'un utilisateur 20 situé à proximité du moyen d'affichage 23 et une base de données 22.

Comme expliqué précédemment, on entend par décodeur 21 un dispositif comportant des moyens de décodage et d'encodage d'un signal audio ou vidéo, des moyens de connexion à un réseau, des moyens de transmission des signaux audio et vidéo à un moyen d'affichage ainsi que des moyens de calcul associés à des moyens de mémorisation.

De même, on entend ici par moyen d'affichage 23 tout moyen de diffusion d'un contenu multimédia. Le moyen d'affichage 23 peut donc prendre la forme d'un téléviseur, de préférence un téléviseur à écran plan. De manière alternative ou complémentaire, le moyen d'affichage 23 peut prendre la forme d'un ordiphone (ou « smartphone » en anglais).

Le capteur de données biométriques 24 peut prendre la forme d'un bracelet intelligent ou d'une montre intelligente, ledit bracelet ou ladite montre comportant un ou plusieurs capteurs biométriques. De manière alternative ou complémentaire, des capteurs de données biométriques 24 peuvent être intégrés au moyen d'affichage 23 ou au décodeur 21.

Le moyen d'affichage 23, la base de données 22 et le capteur de données biométriques 24 sont reliés au décodeur 21. Cette liaison peut par exemple prendre la forme d'une connexion de type Wifi ou Bluetooth. De manière alternative ou complémentaire, cette liaison peut se faire par l'intermédiaire d'un réseau local (LAN pour Local Area Network en anglais) ou par l'intermédiaire d'une connexion à Internet.

Le contenu multimédia diffusé par le moyen d'affichage 23 est découpé en périodes définies par un temps de début et un temps de fin. Le contenu peut par exemple concerner un film ou une émission de télévision. Dans ce cas, les périodes correspondent à différentes scènes du film ou à différents moments de l'émission. La base de données 22 comprend pour chacune desdites périodes une variation attendue d'un niveau d'attention de l'utilisateur 20. Par exemple, si le contenu multimédia concerne un film, une première période peut correspondre à une scène contemplative et être suivie par une deuxième période correspondant à une scène d'action. Dans ce cas, la base de données 22 peut comprendre une information indiquant qu'à la deuxième période relative à une scène d'action correspond une augmentation du niveau d'attention de l'utilisateur 20.

La base de données peut être intégrée au décodeur. Dans ce cas, le contenu de la base de données peut être téléchargé. De manière alternative, les données de la base de données peuvent être obtenues par l'intermédiaire du guide électronique des programmes (EPG en anglais pour « Electronic Program Guide ») ou par l'intermédiaire des tables d'informations des évènements (ou EITs en anglais pour « Event Information Table ») de la diffusion vidéo numérique (DVB en anglais pour « Digital Video Broadcasting »).

Le procédé selon l'invention comprend :

- une étape d'acquisition 1 de premières données biométriques relatives à un utilisateur 20 à l'aide du capteur de données biométriques 24 ;
- une étape d'enregistrement 3, par le décodeur 21, des premières données biométriques acquises ;
- une étape d'association 4, par le décodeur 21, des premières données biométriques à un niveau d'attention de l'utilisateur 20 ;
- une première étape de comparaison 5, par le décodeur 21, du niveau d'attention de l'utilisateur 20 associé aux premières données biométriques avec le niveau d'attention de l'utilisateur 20 associé à des deuxièmes données biométriques enregistrées précédemment.

L'association des données biométriques à un niveau d'attention de l'utilisateur 20 dépend des données biométriques mesurées. Par exemple, si la donnée biométrique mesurée est le rythme cardiaque, le rythme cardiaque peut être associé à un niveau d'attention de l'utilisateur 20 par l'intermédiaire d'une fonction strictement croissante. Ainsi, une augmentation du rythme cardiaque sera associée à une augmentation du niveau d'attention de l'utilisateur 20. Par exemple, la fonction d'association du rythme cardiaque de l'utilisateur 20 à un niveau d'attention dudit utilisateur 20 peut prendre la forme d'une fonction affine du type :

$$A = a \times f$$

avec $A$ le niveau d'attention de l'utilisateur 20, $a$ une constant positive et $f$ la fréquence cardiaque. Le procédé ne s'intéressant qu'à la variation du niveau d'attention, la valeur de la constante $a$ peut être choisie librement.

Les deuxièmes données biométriques enregistrées précédemment peuvent provenir d'une précédente itération, par le système de diffusion 200, du procédé selon l'invention. De manière alternative ou complémentaire, les deuxièmes données biométriques enregistrées précédemment peuvent provenir d'une étape d'initialisation au cours desquelles des valeurs de référence sont définies, éventuellement au cours d'une phase d'apprentissage menée par le décodeur.

Le procédé selon l'invention comprend en outre :

- si le niveau d'attention augmente, une deuxième étape de comparaison 6, par le décodeur 21, de la variation du niveau d'attention de l'utilisateur 20 mesurée avec la variation attendue du niveau d'attention de l'utilisateur 20 extraite de la base de données 22 par le décodeur pour la période du contenu multimédia en cours de visionnage ;
- si la variation mesurée et la variation attendue sont sensiblement identiques, une étape de mise en œuvre d'une action 7 par le décodeur.

On entend par sensiblement identique une différence entre la variation mesurée et la variation attendue inférieures ou égale à 20%, voire inférieure ou égale à 5%. Ce seuil pourra éventuellement être adapté en fonction de la nature de la donnée biométrique mesurée ou en fonction de la précision sur la mesure de cette donnée biométrique.

Ainsi, l'action mise en œuvre par le décodeur 21 n'est effectuée que lorsque le niveau d'attention de l'utilisateur 20 augmente. En outre, ladite action n'est effectuée que si l'évolution de l'attention de l'utilisateur 20 mesurée correspond à l'évolution de l'attention de l'utilisateur 20 attendue compte tenu du contenu diffusé. Ainsi, l'action n'est effectuée que lorsque l'attention de l'utilisateur 20 est à destination du moyen d'affichage 23 et non pas vers une activité sans lien avec le contenu diffusé.

Le procédé selon l'invention peut être itéré à intervalles réguliers afin d'assurer un suivi de l'attention de l'utilisateur 20. Un temps d'attente entre chaque itération peut être défini. Ce temps d'attente peut être constant, dépendre de la donnée biométrique acquise, ou dépendre du contenu diffusé.

Dans un mode de réalisation, l'action mise en œuvre par le décodeur 21 consiste à afficher, par le moyen d'affichage 23, une information importante à l'utilisateur 20. Ainsi, l'information est affichée lorsque l'attention de l'utilisateur 20 à destination du moyen d'affichage 23 est élevée et à une chance plus grande d'être prise en compte par l'utilisateur 20. L'information peut par exemple être un message publicitaire ou un message de type «alerte enlèvement ». Ainsi, l'information importante est diffusée au moment où l'attention de l'utilisateur est dirigée vers le moyen d'affichage.

Dans un mode de réalisation, l'acquisition des premières données biométriques s'effectue sur une fenêtre glissante. La durée de cette fenêtre glissante varie en fonction des données biométriques acquises. Par exemple, si les données biométriques concernent le rythme cardiaque, la durée de la fenêtre glissante peut être sensiblement égale à dix secondes. Dans un autre exemple, si les données biométriques concernent le niveau de transpiration, la durée de la fenêtre glissante peut être sensiblement égale à une minute.

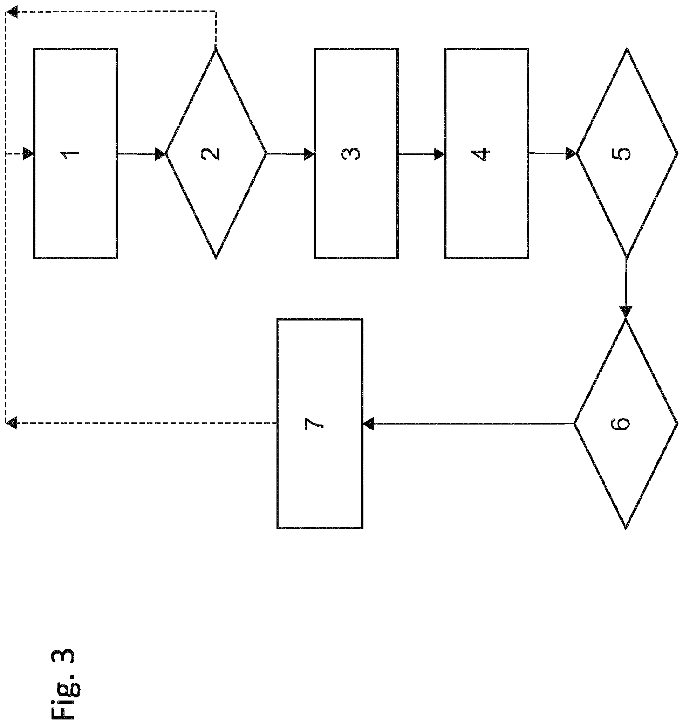

Dans un mode de réalisation illustré à la figure 3, le procédé comprend, directement après l'étape d'acquisition 1 de données biométriques, une troisième étape de comparaison 2 par le décodeur 21 des premières données biométriques acquises aux deuxièmes données biométriques précédemment enregistrées, le procédé réalisant une nouvelle étape d'acquisition 1 si les données biométriques acquises et enregistrées sont sensiblement identiques. Une temporisation peut être mise en place afin que la nouvelle itération du procédé ne s'effectue pas immédiatement, mais seulement après un temps donné.

Les données biométriques sont considérées comme sensiblement identiques si les premières données biométriques ne sont pas supérieures ou inférieures de plus de 20% aux deuxièmes données biométriques. De manière alternative, les données biométriques sont considérées comme sensiblement identiques si les premières données biométriques ne sont pas supérieures ou inférieures de plus de 5% aux deuxièmes données biométriques.

Ce mode de réalisation permet de ne pas effectuer la totalité du procédé si aucune évolution des données biométriques n'est constatée. Les deuxièmes données biométriques sont donc réutilisées lors de la prochaine itération du procédé selon l'invention par le système de diffusion 200.

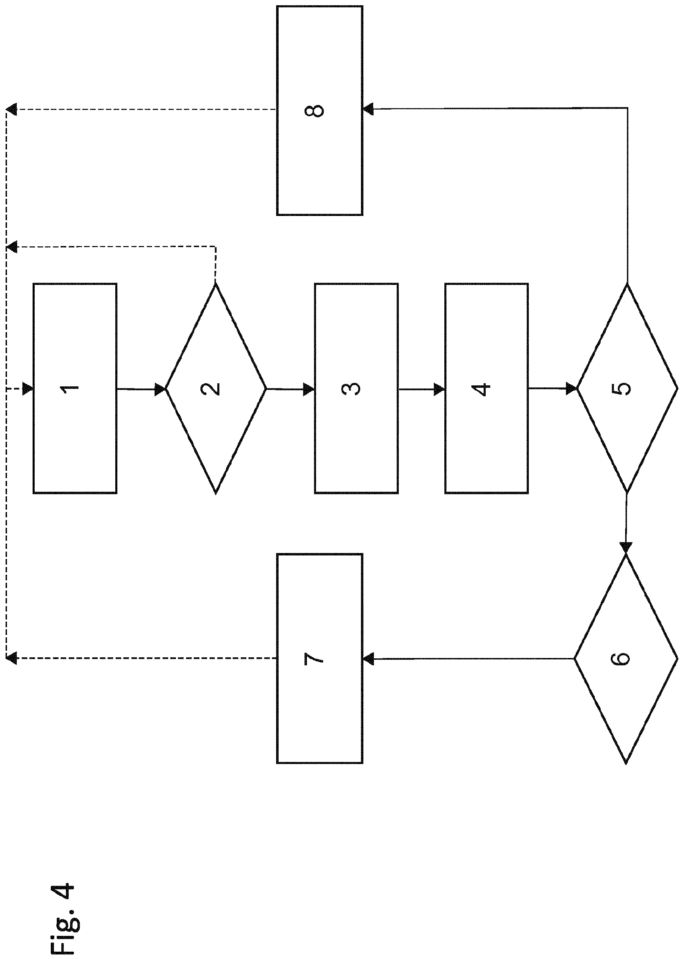

Dans un mode de réalisation illustré à la figure 4, le procédé de diffusion selon l'invention comprend, directement après la première étape de comparaison 5 et si le niveau d'attention diminue, une étape d'émission 8, sur instruction du décodeur 21, d'un signal afin de capter l'attention de l'utilisateur 20. Le signal peut par exemple être émis par le moyen d'affichage 23. Le signal peut consister en une musique, un signal lumineux ou bien un son bref. L'émission du signal peut éventuellement être accompagnée d'une étape de proposition, à l'aide du moyen d'affichage 23, d'une activité ludique à l'utilisateur 20. De manière alternative ou complémentaire, le décodeur 21 comporte des moyens d'émission d'un signal sonore et/ou visuel et le signal est émis par le décodeur 21.

Cette étape permet d'attirer l'attention de l'utilisateur 20 lorsque ce dernier semble ne plus prêter attention au contenu diffusé.

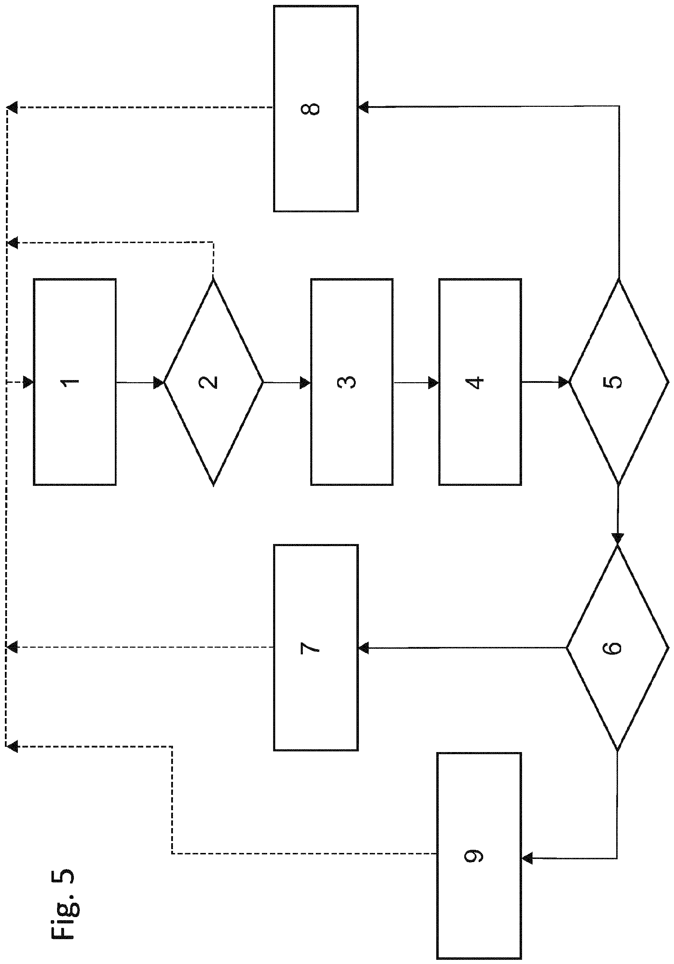

Dans un mode de réalisation illustré à la figure 5, le procédé de diffusion selon l'invention comprend, directement après la deuxième étape de comparaison 6 et si la variation mesurée et la variation attendue ne sont pas identiques, une étape d'émission 9, sur instruction du décodeur 21, d'un signal afin de capter l'attention de l'utilisateur 20. Le signal pourra par exemple être émis par le moyen d'affichage 23.

Cette étape permet au système 200 de détecter lorsqu'une modification de l'attention de l'utilisateur 20 est induite par un élément extérieur au contenu diffusé et d'attirer à nouveau l'attention en direction du contenu diffusé par l'émission d'un signal. Le signal peut consister en une musique, un signal lumineux ou bien un son bref. L'émission du signal peut éventuellement être accompagnée d'une étape de proposition, à l'aide du moyen d'affichage 23, d'une activité ludique à l'utilisateur 20. De manière alternative ou complémentaire, le décodeur 21 comporte des moyens d'émission d'un signal sonore et/ou visuel et le signal est émis par le décodeur 21.

Dans un mode de réalisation du procédé de diffusion selon l'invention, la base de données 22 comporte en outre, pour chaque période, une donnée relative à l'action à mettre en œuvre par le décodeur 21 lors de l'étape de mise en œuvre d'une action 7, c'est-à-dire lorsque la variation du niveau d'attention mesurée et la variation du niveau d'attention attendue sont identiques.

Ainsi, il est possible d'adapter l'action à effectuer en fonction du contenu diffusé. Si par exemple le sujet du contenu diffusé concerne les véhicules, l'action à effectuer pourra consister en une instruction envoyée au moyen d'affichage 23 par le décodeur 21 générant un message comportant des informations relatives à un véhicule en particulier.

Dans un mode de réalisation du procédé de diffusion selon l'invention, le capteur de données biométriques 24 consiste en un bracelet intelligent ou une paire de lunettes intelligente. Dans cette configuration, il n'est pas nécessaire d'intégrer des capteurs biométriques au niveau du moyen d'affichage 23 ou du décodeur 21.

Dans un mode de réalisation du procédé de diffusion selon l'invention, les données biométriques comportent des données relatives au rythme cardiaque et/ou au niveau de transpiration et/ou à la température et/ou l'activité cérébrale et/ou le rythme respiratoire de l'utilisateur 20.

**Revendications**

1. Procédé de diffusion d'un contenu multimédia **caractérisé en ce qu'**il met en œuvre un système de diffusion (200) comportant un décodeur (21), un moyen d'affichage (23), un capteur de données biométriques (24) d'un utilisateur (20) situé à proximité du moyen d'affichage (23) et une base de données (22) ; le moyen d'affichage (23), la base de données (22) et le capteur de données biométriques (24) étant reliés au décodeur (21); le contenu multimédia étant affiché par le moyen d'affichage (23) et découpé en différentes périodes ; la base de données (22) comprenant pour chacune desdites périodes une variation attendue d'un niveau d'attention de l'utilisateur (20) ; le procédé comportant :

   - une étape d'acquisition (1) de premières données biométriques relatives à l'utilisateur (20) à l'aide du capteur de données biométriques (24) ;
   - une étape d'enregistrement (3), par le décodeur (21), des premières données biométriques ;

   - une étape d'association (4), par le décodeur (21), des premières données biométriques à un niveau d'attention de l'utilisateur (20) ;
   - une première étape de comparaison (5), par le décodeur (21), du niveau d'attention de l'utilisateur (20) associé aux premières données biométriques avec le niveau d'attention de l'utilisateur (20) associé à des deuxièmes données biométriques enregistrées précédemment ;
   - si le niveau d'attention de l'utilisateur (20) augmente, une deuxième étape de comparaison (6), par le décodeur (21), de la variation mesurée du niveau d'attention de l'utilisateur (20) avec la variation attendue du niveau d'attention de l'utilisateur (20) extraite de la base de données (22) par le décodeur pour la période du contenu multimédia en cours de diffusion ;
   - si la variation mesurée et la variation attendue sont sensiblement identiques, une étape de mise en œuvre d'une action (7) consistant en une opération de diffusion d'un message par le décodeur (21).

2. Procédé de diffusion selon la revendication précédente **caractérisé en ce qu'**il comporte, directement après l'étape d'acquisition (1) des premières données biométriques une troisième étape de comparaison (2), par le décodeur (21), des premières données biométriques avec les deuxièmes données biométriques, le procédé réalisant une nouvelle étape d'acquisition (1) si les premières données biométriques et les deuxièmes données biométriques sont sensiblement identiques.

3. Procédé de diffusion selon l'une des revendications précédentes **caractérisé en ce que** le procédé comprend, directement après la première étape de comparaison (5) et si le niveau d'attention diminue, une étape d'émission (8), sur instruction du décodeur (21), d'un signal.

4. Procédé de diffusion selon l'une des revendications précédentes **caractérisé en ce que** le procédé comprend, directement après la deuxième étape de comparaison (6) et si la variation mesurée et la variation attendue ne sont pas identiques, une étape d'émission (9), sur instruction du décodeur (21), d'un signal.

5. Procédé de diffusion selon l'une des revendications précédentes **caractérisé en ce que** la base de données (22) comporte, pour chaque période, une donnée relative au message à diffuser au cours de l'opération de diffusion d'un message par le décodeur (21) lors de l'étape de mise en œuvre d'une action (7).

6. Procédé de diffusion selon l'une des revendications précédentes **caractérisé en ce que** le capteur de données biométriques (24) consiste en un bracelet comportant un capteur biométrique ou une paire de lunettes comportant un capteur biométrique.

7. Procédé de diffusion selon l'une des revendications précédentes **caractérisé en ce que** les données biométriques comportent des données relatives au rythme cardiaque et/ou au niveau de transpiration et/ou à la température et/ou l'activité cérébrale et/ou le rythme respiratoire de l'utilisateur (20).

8. Décodeur (21) pour la diffusion d'un contenu multimédia, ledit décodeur (21) comportant des moyens pour être connecté à :

- un moyen d'affichage (23) destiné à afficher le contenu multimédia, ledit contenu multimédia étant découpé en différentes périodes ;
- un capteur de donnée biométrique (24) configuré pour acquérir des premières données biométriques relatives à un utilisateur (20) situé à proximité du moyen d'affichage ;
- une base de données (22) comprenant pour chacune desdites périodes une variation attendue d'un niveau d'attention de l'utilisateur (20) ;

le décodeur (21) étant **caractérisé en ce qu'**il comporte des moyens pour :

- enregistrer les premières données biométriques issue du capteur de donnée biométrique (24) ;
- associer les premières données biométriques à un niveau d'attention de l'utilisateur (20) ;
- comparer le niveau d'attention de l'utilisateur (20) associé aux premières données biométriques avec le niveau d'attention de l'utilisateur (20) associé à des deuxièmes données biométriques enregistrées précédemment ;
- si le niveau d'attention de l'utilisateur (20) augmente, comparer la variation mesurée du niveau d'attention de l'utilisateur (20) avec la variation attendue du niveau d'attention de l'utilisateur (20) extraite de la base de données (22) pour la période du contenu multimédia en cours de diffusion ;
- si la variation mesurée et la variation attendue sont sensiblement identiques, mettre en œuvre une action consistant en une opération de diffusion d'un message.

9. Produit programme d'ordinateur comprenant des instructions qui conduisent le décodeur selon la revendication 8 à exécuter les étapes du procédé selon l'une des revendications 1 à 7.

10. Support lisible par ordinateur, sur lequel est enregistré le programme d'ordinateur selon la revendication 9.

**Patentansprüche**

1. Sendeverfahren eines Multimedien-Inhaltes, **dadurch gekennzeichnet, dass** es ein Sendesystem (200) umsetzt, umfassend einen Dekodierer (21), ein Anzeigemittel (23), einen biometrischen Datensensor (24), einen Nutzer (20), der in der Nähe des Anzeigemittels (23) angeordnet ist, und eine Datenbank (22); wobei das Anzeigemittel (23), die Datenbank (22) und der biometrische Datensensor (24) mit dem Dekodierer (21) verbunden sind; wobei der Multimedien-Inhalt durch das Anzeigemittel (23) angezeigt und in unterschiedliche Perioden unterteilt ist; wobei die Datenbank (22) für jede der genannten Perioden eine erwartete Abweichung eines Aufmerksamkeitsniveaus des Nutzers (20) umfasst; wobei das Verfahren umfasst:

- einen Erwerbsschritt (1) erster biometrischer Daten bezüglich des Nutzers (20) mithilfe des biometrischen Datensensors (24);
- einen Speicherschritt (3) der ersten biometrischen Daten durch den Dekodierer (21);
- einen Zuordnungsschritt (4) der ersten biometrischen Daten auf ein Aufmerksamkeitsniveau des Nutzers (20) durch den Dekodierer (21);
- einen ersten Vergleichsschritt (5) des Aufmerksamkeitsniveaus des Nutzers (20), das den ersten biometrischen Daten zugeordnet ist, mit dem Aufmerksamkeitsniveau des Nutzers (20), das den zuvor gespeicherten zweiten biometrischen Daten zugeordnet ist, durch den Dekodierer (21);
- wenn das Aufmerksamkeitsniveau des Nutzers (20) steigt, einen zweiten Vergleichsschritt (6) der gemessenen Abweichung des Aufmerksamkeitsniveaus des Nutzers (20) mit der erwarteten Abweichung des Aufmerksamkeitsniveau des Nutzers (20), das vom Dekodierer für die Periode des sich in der Sendung befindenden Multimedien-Inhaltes aus der Datenbank (22) extrahiert wurde, durch den Dekodierer (21);
- wenn die gemessene Abweichung und die erwartete Abweichung deutlich identisch sind, einen Umsetzungsschritt einer Aktion (7), bestehend in einer Sendeoperation einer Nachricht durch den Dekodierer (21).

2. Sendeverfahren gemäß dem voranstehenden Anspruch, **dadurch gekennzeichnet, dass** es direkt nach dem Erwerbsschritt (1) der ersten biometrischen Daten einen dritten Vergleichsschritt (2) erster biometrischer Daten mit den zweiten biometrischen Daten durch den Dekodierer (21) umfasst, wobei das Verfahren einen neuen Erwerbsschritt (1) realisiert, wenn die ersten biometrischen Daten und die zweiten biometrischen Daten deutlich identisch sind.

3. Sendeverfahren gemäß einem der voranstehenden Ansprüche, **dadurch gekennzeichnet, dass** das Verfahren direkt nach dem ersten Vergleichsschritt (5) und wenn das Aufmerksamkeitsniveau sinkt, auf Anweisung des Dekodierers (21) einen Ausgabeschritt (8) eines Signals umfasst.

4. Sendeverfahren gemäß einem der voranstehenden Ansprüche, **dadurch gekennzeichnet, dass** das Verfahren direkt nach dem zweiten Vergleichsschritt (6) und wenn die gemessene Abweichung und die erwartete Abweichung nicht identisch sind, auf Anweisung des Dekodierers (21) einen Ausgabeschritt (6) eines Signals umfasst.

5. Sendeverfahren gemäß einem der voranstehenden Ansprüche, **dadurch gekennzeichnet, dass** die Datenbank (22) für jede Periode ein Datenelement bezüglich der im Verlauf der Sendeoperation durch den Dekodierer (21) zu sendende Nachricht bei dem Umsetzungsschritt einer Aktion (7) umfasst.

6. Sendeverfahren gemäß einem der voranstehenden Ansprüche, **dadurch gekennzeichnet, dass** der biometrische Datensensor (24) aus einem Armband besteht, umfassend einen biometrischen Sensor oder eine Brille, umfassend einen biometrischen Sensor.

7. Sendeverfahren gemäß einem der voranstehenden Ansprüche, **dadurch gekennzeichnet, dass** die biometrischen Daten Daten bezüglich des Herzrhythmus und / oder der Transpiration und / oder der Temperatur und / oder der Aktivität des Gehirns und / oder der Atemfrequenz des Nutzers (20) umfassen.

8. Dekodierer (12) für das Senden eines Multimedien-Inhaltes, wobei der genannte Dekodierer (21) Mittel umfasst zum Anschließen an:

   - ein Anzeigemittel (23), das zum Anzeigen des Multimedien-Inhaltes bestimmt ist, wobei der genannte Multimedien-Inhalt in unterschiedliche Perioden unterteilt ist;
   - einen biometrischen Sensor (24), der zum Erwerben der ersten biometrischen Daten bezüglich eines Nutzers (20) konfiguriert ist, der in der Nähe des Anzeigemittels angeordnet ist;
   - eine Datenbank (22), umfassend eine erwartete Abweichung eines Aufmerksamkeitsniveaus des Nutzers (20) für jede der genannten Abweichungsperioden ;

   wobei der Dekodierer (21) **dadurch gekennzeich-**

**net ist, dass** er Mittel umfasst zum:

   - Speichern der ersten biometrischen Daten, die aus dem biometrischen Datensensor (24) hervorgegangen sind;
   - Zuordnen der ersten biometrischen Daten zu einem Aufmerksamkeitsniveau des Nutzers (20);
   - Vergleichen des Aufmerksamkeitsniveaus des Nutzers (20), das den ersten biometrischen Daten zugeordnet ist, mit dem Aufmerksamkeitsniveau des Nutzers (20), das den zuvor gespeicherten zweiten biometrischen Daten zugeordnet ist;
   - wenn das Aufmerksamkeitsniveau des Nutzers (20) steigt, Vergleichen der gemessenen Abweichung des Aufmerksamkeitsniveaus (20) des Nutzers mit der erwarteten Abweichung des Aufmerksamkeitsniveaus des Nutzers (20), das für die Periode des sich im Senden befindenden Multimedien-Inhaltes aus der Datenbank (22) extrahiert wurde;
   - wenn die gemessene Abweichung und die erwartete Abweichung deutlich identisch sind, Umsetzen einer Aktion, die in einer Sendeoperation einer Nachricht besteht.

9. Computer-Programmprodukt, umfassend Anweisungen, die den Dekodierer gemäß Anspruch 8 veranlassen, die Schritte des Verfahrens gemäß einem der Ansprüche 1 bis 7 auszuführen.

10. Per Computer lesbarer Träger, auf dem das Computerprogramm gemäß Anspruch 9 gespeichert ist.

**Claims**

1. Method of broadcasting a multimedia content **characterised in that** it implements a broadcasting system (200) comprising a decoder (21), a display means (23), a sensor of biometric data (24) of a user (20) situated in proximity to the display means (23) and a database (22); with the display means (23), the database (22) and the sensor of biometric data (24) being connected to the decoder (21); with the multimedia content being displayed by the display means (23) and cut into different periods; with the database (22) comprising for each one of said periods an expected variation of the level of attention of the user (20); with the method comprising:

   - a step of acquiring (1) first biometric data relating to the user (20) with the aid of the sensor of biometric data (24);
   - a step of recording (3), by the decoder (21), of the first biometric data;
   - a step of association (4), by the decoder (21), of the first biometric data with a level of attention of the user (20);

- a first step of comparison (5), by the decoder (21), of the level of attention of the user (20) associated with the first biometric data with the level of attention of the user (20) associated with previously recorded second biometric data;

- if the level of attention of the user (20) increases, a second step of comparison(6), by the decoder (21), of the measured variation of the level of attention of the user (20) with the expected variation of the level of attention of the user (20) extracted from the database (22) by the decoder for the period of the multimedia content during broadcasting;

- if the measured variation and the expected variation are substantially identical, a step of implementing an action (7) consisting of an operation of broadcasting a message by the decoder (21).

2. Method of broadcasting according to the preceding claim **characterised in that** it comprises, directly after the step of acquisition (1) of the first biometric data a third step of comparison (2), by the decoder (21), of the first biometric data with the second biometric data, with the method carrying out another step of acquisition (1) if the first biometric data and the second biometric data are substantially identical.

3. Method of broadcasting according to one of the preceding claims **characterised in that** the method comprises, directly after the first step of comparison (5) and if the level of attention decreases, a step of emitting (8), upon instruction from the decoder (21), a signal.

4. Method of broadcasting according to one of the preceding claims **characterised in that** the method comprises, directly after the second step of comparison (6) and if the measured variation and the expected variation are not identical, a step of emitting (9), upon instruction from the decoder (21), a signal.

5. Method of broadcasting according to one of the preceding claims **characterised in that** the database (22) comprises, for each period, a piece of data related to the message to be broadcast during the operation of broadcasting a message by the decoder (21) during the step of implementing an action (7).

6. Method of broadcasting according to one of the preceding claims **characterised in that** the sensor of biometric data (24) consists of a bracelet that comprises a biometric sensor or a pair of glasses that comprises a biometric sensor.

7. Method of broadcasting according to one of the preceding claims **characterised in that** the biometric data comprises data relating to the heart rate and/or to the level of perspiration and/or to the temperature and/or the brain activity and/or the breathing rate of the user (20).

8. Decoder (21) for the broadcasting of a multimedia content, said decoder (21) comprising means to be connected to:

- a display means (23) intended to display the multimedia content, said multimedia content being cut into different periods;
- a sensor of biometric data (24) configured to acquire the first biometric data relating to a user (20) situated in proximity to the display means;
- a database (22) comprising for each one of said periods an expected variation of the level of attention of the user (20);

the decoder (21) being **characterised in that** it comprises means for:

- recording the first biometric data coming from the sensor of biometric data (24);
- associating the first biometric data with a level of attention of the user (20);
- comparing the level of attention of the user (20) associated with the first biometric data with the level of attention of the user (20) associated with previously recorded second biometric data;
- if the level of attention of the user (20) increases, comparing the measured variation of the level of attention of the user (20) with the expected variation of the level of attention of the user (20) extracted from the database (22) for the period of the multimedia content during broadcasting;
- if the measured variation and the expected variation are substantially identical, implementing an action consisting of an operation of broadcasting a message.

9. Computer program product comprising instructions that lead the decoder according to claim 8 to execute the steps of the method according to one of claims 1 to 7.

10. Support that can be read by a computer, whereon is recorded the computer program according to claim 9.

# Fig. 1

200

21

22

23

20

24

Fig. 2

Fig. 3

Fig. 4

EP 3 406 082 B1

Fig. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015271558 A1
- EP 1582965 A1
- US 2014096152 A1